# FASCICULE DE BREVET EUROPEEN

(11) **EP 1 222 417 B1**
(45) Date de publication et mention de la délivrance du brevet: **18.02.2004**
(21) Numéro de dépôt: 00969630.3
(22) Date de dépôt: 17.10.2000
(51) Int. Cl.: F16L 15/06, E21B 17/042

(54) **JOINT TUBULAIRE FILETE ETANCHE A LA PRESSION EXTERIEURE**
AUSSENDRUCKDICHTE SCLAUCHVERSCHRAUBUNG
THREADED TUBULAR JOINT PROOF TO EXTERNAL PRESSURE

(30) Priorité: 21.10.1999 FR 9913385
(43) Date de publication de la demande: 17.07.2002
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0041 (JP)
(72) Inventeur: NOEL, Thierry, F-59990 Sebourg (FR)
(74) Mandataire: Pellicani, Félix Angelo
(86) Numéro de dépôt international: PCT/FR2000/002891
(87) Numéro de publication internationale: WO 2001/029476

(56) Documents cités:
- WO-A-84/04352
- US-A- 1 927 656
- "1992 TUBING TABLES" WORLD OIL,US,GULF PUBLISHING CO. HOUSTON, vol. 213, no. 1, 1992, pages 53-56,58,60,-5-78,80,82,8, XP000241611 ISSN: 0043-8790

## Description

La présente invention est relative à un joint fileté pour tubes, plus spécialement pour tubes d'acier qui est destiné notamment à l'industrie du pétrole et du gaz et aux assemblages de tubes réalisés à partir de ce joint, particulièrement intéressant du fait de son étanchéité aux pressions extérieures élevées.

On connaît des joints pour tubes utilisés dans l'industrie du pétrole et du gaz dans lesquels la jonction est constituée par un élément mâle fileté extérieurement qui vient se visser dans un élément femelle fileté intérieurement, les deux filetages mâle et femelle se correspondant. Ces joints sont utilisés notamment pour la réalisation de colonnes de tubes d'extraction ou de cuvelage pour les puits de pétrole et de gaz.

Suivant les conditions plus ou moins sévères d'exploitation des puits de pétrole et de gaz, on complète, de façon connue, la structure de base des joints décrite ci-dessus en munissant ceux-ci de dispositifs d'étanchéité de types divers tels que des bagues ou anneaux en matière synthétique ou des surfaces métalliques en appui l'une sur l'autre.

On peut citer à titre d'exemple le brevet EP 0 488 912 qui est un joint à filetage conique muni dans la zone située après le filetage mâle voisine de l'extrémité libre de l'élément mâle d'une surface conique mâle et dans la zone correspondante de l'élément femelle d'une surface conique femelle correspondante, ce couple de surfaces mâle et femelle en appui l'une sur l'autre quand le joint est dans la position vissée formant portée d'étanchéité interne vis-à-vis du fluide circulant à l'intérieur des tubes. Le joint décrit dans le brevet EP 0 488 912 est aussi muni d'une butée qui permet de positionner lors du vissage les deux éléments filetés mâle et femelle de façon précise l'un par rapport à l'autre.

Pour certaines applications il est nécessaire que les joints résistent et restent étanches à la fois à la pression intérieure du fluide circulant dans le tube et à la pression extérieure existant autour du tube. Cette étanchéité est critique pour la fiabilité du joint lorsque la pression extérieure est élevée (par exemple supérieure à 600 bars), que le fluide concerné soit un liquide ou un gaz ou un mélange des deux. Dans ce cas, la portée d'étanchéité interne telle que celle décrite dans le brevet EP 0 488 912 ne permet pas au-delà d'une pression donnée de résister à la pénétration de fluide qui progresse de l'extérieur vers l'intérieur le long du filetage et arrive à déformer voire à déboîter la lèvre mâle sur laquelle est située ladite portée d'étanchéité interne et s'infiltrer ainsi à l'intérieur du tube.

Pour résoudre ce problème, on a pensé à munir le type de joint selon EP 0 488 912 d'une portée située au voisinage de l'extrémité libre de l'élément femelle.

Le brevet FR 7712851 décrit ainsi un joint muni d'une portée d'étanchéité interne au voisinage de l'extrémité libre de l'élément mâle et une portée d'étanchéité externe au voisinage de l'extrémité libre de l'élément femelle. Il devrait être étanche à la pression intérieure et à la pression extérieure. Mais, selon le FR 77 12851, chacune de ces deux portées est associée à une butée, ce qui rend le fonctionnement et la fabrication du joint beaucoup plus délicats. En effet des déformations anormales peuvent se produire lorsque les tolérances dimensionnelles ne sont pas parfaitement respectées ou lorsque les couples de serrage sont trop élevés, déformations qui peuvent modifier fondamentalement le fonctionnement des deux portées et leur faire perdre leur étanchéité tant vis-à-vis du fluide interne au tube que du fluide externe au tube.

La réalisation d'un tel joint est chère du fait d'une part des tolérances d'usinage nécessaires à son bon fonctionnement et d'autre part de la quantité de matière nécessaire pour réaliser à la fois une portée d'étanchéité interne et une portée d'étanchéité externe qui imposent l'utilisation de tubes plus épais.

On connaît aussi dans l'art antérieur des joints dont l'élément mâle et l'élément femelle comportent un filetage conique ou cylindrique constitué de deux zones filetées indépendantes (ces zones filetées peuvent aussi être appelées gradins) décalées radialement et axialement et qui sont munis de portées d'étanchéité.

Tel est le cas du brevet EP 0 767 335 qui décrit un joint qui comporte un filetage conique à deux zones filetées indépendantes décalées radialement et axialement de sorte que ces zones filetées sont situées sur deux cônes différents décalés axialement l'un par rapport à l'autre, avec une portée d'étanchéité interne au voisinage de l'extrémité libre de l'élément mâle et une portée d'étanchéité externe au voisinage de l'extrémité libre de l'élément femelle. Mais, du fait de la situation de la portée d'étanchéité externe au voisinage de l'extrémité libre de l'élément femelle, celle-ci ne peut pas résister à des pressions très élevées car sa rigidité n'est pas soutenue par suffisamment de matière en extrémité de tube.

On connaît aussi le brevet EP 0149612 qui décrit un joint qui comporte un filetage à deux zones filetées indépendantes, décalées radialement et axialement de sorte que ces zones filetées sont situées sur deux cônes différents décalés axialement l'un par rapport à l'autre, entre lesquelles est prévue une portée d'étanchéité constituée de surfaces mâle et femelle en contact d'appui lors du vissage, ce joint comportant également une portée d'étanchéité interne au voisinage de l'extrémité libre de l'élément mâle ainsi qu'une butée oblique à l'extrémité libre dudit élément mâle.

Compte tenu de sa structure à deux zones filetées indépendantes décalées radialement et axialement, le joint selon EP 0149612 nécessite des parois de tubes relativement épaisses et il est difficile compte tenu du coût et de l'encombrement correspondant d'envisager sa réalisation sous forme manchonnée.

On a cherché dans la présente invention à réaliser un joint tubulaire fileté qui, tout en étant étanche à la pression extérieure, ne présente pas les inconvénients des joints ci-dessus.

Ainsi on a cherché à réaliser un joint qui soit étanche à des pressions extérieures élevées tout en restant étanche à la pression intérieure et qui soit simple, robuste et économique tant par la quantité de matière et les épaisseurs de tubes qu'il nécessite que par sa gamme d'usinage.

Par robuste, on entend un joint qui soit apte à résister à des pressions élevées, par exemple de l'ordre de 600 bars à 1500 bars, et qui soit facile à monter sur chantier.

On a également cherché à réaliser un joint tubulaire fileté qui diffère le moins possible des joints existant déjà sur le marché, dont le filetage soit constitué d'une seule zone filetée par opposition aux joints filetés dont le filetage comporte deux zones filetées indépendantes décalées axialement et radialement de sorte que leurs zones filetées sont situées sur deux cônes différents décalés axialement l'un par rapport à l'autre, et qui puisse être réalisé à partir de tels joints à une seule zone filetée sans en modifier la structure d'ensemble.

On a aussi cherché à faire un joint qui dispose d'un moyen unique d'étanchéité qui puisse être utilisé tant vis-à-vis de la pression intérieure que de la pression extérieure.

Le joint selon l'invention est destiné à être utilisé pour la réalisation de canalisations ou de colonnes de tubes.

Son domaine d'utilisation n'est pas limité à l'industrie du pétrole et du gaz mais s'étend à toute application dans laquelle se posent ou peuvent se poser les mêmes types de problèmes.

On peut citer à titre d'exemple non limitatif l'extraction d'eau liquide ou vapeur par géothermie.

Dans ce cadre, les joints seront réalisés en tous matériaux métalliques du type, par exemple, acier ou alliage ferreux ou non ferreux possédant notamment les caractéristiques mécaniques voulues et la tenue à la corrosion nécessaire à l'application envisagée.

Le joint tubulaire fileté selon l'invention est décrit dans la revendication 1.

Par zones globalement centrales de la zone filetée mâle et de la zone filetée femelle dans lesquelles les filetages mâle et femelle ont été interrompus, on entend une zone qui se trouve sensiblement au milieu, selon l'axe du joint, de la zone filetée mâle et femelle ou dans une partie qui est distante du point milieu selon l'axe de joint de la zone filetée mâle et femelle d'une longueur au plus égale de chaque côté à ¼ de la longueur selon l'axe du joint de la zone filetée.

Avantageusement la zone filetée mâle et la zone filetée femelle seront considérées comme incorporant à la fois les filets parfaits et les filets d'extrémités imparfaits ou évanouissants ou incomplets.

Ce moyen d'étanchéité sera appelé par la suite, par simple commodité « moyen d'étanchéité central » ou « moyen central d'étanchéité » étant entendu que ce terme ne doit pas être interprété stricto sensu compte tenu des informations données ci-avant sur la définition des zones globalement centrales.

Le moyen d'arrêt permettant d'arrêter le vissage de l'élément mâle dans l'élément femelle en position déterminée peut être constitué soit par des moyens liés directement aux filetages soit par des moyens indépendants des filetages.

Les filetages étant coniques donc naturellement frettants, le moyen d'arrêt lié directement aux filetages peut être constitué, de façon en soi connu, par un vissage effectué à couple prédéterminé ou par deux repères, un situé sur l'élément mâle et un sur l'élément femelle, qui sont amenés en coïncidence en fin de vissage.

S'agissant de moyens indépendants des filetages, le moyen d'arrêt peut être une butée venant s'opposer, à la position voulue, à la poursuite du vissage relatif de l'élément mâle dans l'élément femelle.

Suivant les conditions d'utilisation prévues pour le joint de l'invention, le joint peut ne comporter qu'un seul moyen d'étanchéité décrit ci-dessus, le moyen d'étanchéité central, ou il peut comporter en plus de ce moyen d'étanchéité central un deuxième moyen d'étanchéité.

Ce deuxième moyen d'étanchéité sera avantageusement un moyen en soi connu tel que par exemple un contact d'appui métal-métal assuré par deux surfaces de portée disposées respectivement l'une au voisinage de l'extrémité libre de l'élément mâle et l'autre sur la partie correspondante de l'élément femelle.

Les surfaces de portée du moyen d'étanchéité central peuvent être de tout type ou forme du moment qu'elles sont aptes à venir en appui l'une sur l'autre lors de l'assemblage du joint.

On peut, par exemple, utiliser deux surfaces cylindriques, la surface de portée mâle étant d'un diamètre légèrement supérieur au diamètre de la surface de portée femelle afin d'assurer à l'assemblage un frettage des deux surfaces créant l'étanchéité.

On peut aussi utiliser au moins une surface cylindrique, l'autre surface étant par exemple torique ou de toute nature apte à créer un contact frettant avec la première.

La surface de portée mâle et la surface de portée femelle n'ont pas forcément le même type de géométrie.

De façon avantageuse, au moins l'une des surfaces de portée du moyen d'étanchéité central, la surface mâle ou la surface femelle, sera constituée par une surface conique dont la conicité va dans le même sens que la conicité du filetage mais dont avantageusement l'angle par rapport à l'axe commun de l'élément mâle et de l'élément femelle est supérieur à l'angle du cône du filetage par rapport à cet axe.

A titre d'exemple non limitatif la longueur du contact entre elles des surfaces de portée mâle et femelle du moyen central d'étanchéité pourra être comprise entre 1 et 10 mm.

Les filetages des éléments mâles et femelles peuvent être de tout type, tel que par exemple des filetages API (American Petroleum Institute) triangulaires ou trapézoïdaux, ces derniers étant désignés par l'API sous le nom de « buttress », appellation mondialement connue et dont l'usage est général dans la profession pour désigner ce type de filetages.

En cas de filetage buttress, ils peuvent être à flancs de travail négatifs, notamment quand ils sont associés à une butée, pour permettre un meilleur accrochage des filetages entre eux.

La présente invention est aussi relative à un assemblage fileté de deux tubes mettant en oeuvre le joint selon l'invention dont la structure vient d'être décrite.

Plusieurs variantes peuvent être réalisées.

Selon une première variante, l'assemblage est du type dit intégral, chaque tube à assembler portant alternativement à chacune de ses extrémités un élément mâle et un élément femelle selon le joint de l'invention, tels que décrits précédemment.

Ainsi l'assemblage intégral de deux tubes est réalisé en vissant l'élément mâle de l'extrémité d'un premier tube dans l'élément femelle de l'extrémité du deuxième tube.

Suivant la configuration et l'épaisseur des tubes, il pourra être avantageux de réaliser l'élément femelle sur une extrémité de tube dont le diamètre extérieur a été préalablement expansé, l'élément mâle étant réalisé sur un tube dont l'extrémité pourra si nécessaire avoir été épaissie par exemple par formage à chaud.

Selon une deuxième variante, l'assemblage de deux tubes est du type manchonné, c'est-à-dire réalisé en faisant appel à un manchon réunissant les deux tubes, et met en oeuvre deux joints selon l'invention, dont la structure a été décrite précédemment.

Dans ce cas un élément mâle tel que décrit précédemment est réalisé à chaque extrémité de tube et un élément femelle tel que décrit précédemment est réalisé à chaque extrémité d'un manchon, les deux éléments mâles des deux extrémités des deux tubes à assembler venant se visser dans les deux éléments femelles du manchon.

Dans ce cas, les extrémités libres des deux tubes à assembler peuvent, dans un premier mode de réalisation, venir en fin de vissage s'appuyer l'une sur l'autre à l'intérieur du manchon, constituant ainsi une butée qui permet d'arrêter le vissage en position déterminée.

Dans un deuxième mode de réalisation de l'assemblage manchonné, l'extrémité libre de chaque tube vient s'appuyer sur un talon prévu dans la partie centrale du manchon.

Les figures et les exemples ci-après décrivent à titre d'exemples non limitatifs les joints et les assemblages selon l'invention.

La figure 1 représente une vue en demi-coupe axiale de l'élément mâle et de l'élément femelle d'un joint fileté selon l'invention dans une position non assemblée.

La figure 2 représente le joint selon l'invention de la figure 1 dans la position assemblée.

La figure 3 représente en demi-coupe axiale un joint selon l'invention dans la position assemblée, ce joint étant une variante du joint de la figure 2.

La figure 4 représente en demi-coupe axiale un joint selon l'invention dans la position assemblée, ce joint étant une autre variante du joint de la figure 2.

La figure 5 est une représentation agrandie de la partie I de la figure 2 sur laquelle est figuré un premier mode de réalisation du moyen d'étanchéité central du joint selon l'invention.

La figure 6 est une variante de la figure 5 et représente un autre mode de réalisation du moyen d'étanchéité central du joint selon l'invention.

La figure 7 est une autre variante de la figure 5 et représente un autre mode de réalisation du moyen d'étanchéité central du joint selon l'invention.

La figure 8 représente en coupe selon l'axe et en position assemblée un assemblage fileté du type manchonné selon l'invention, qui met en oeuvre deux joints filetés également selon l'invention, le manchon comportant un talon central.

La figure 9 représente en coupe selon l'axe et en position assemblée un autre assemblage fileté du type manchonné selon l'invention, qui met en oeuvre deux joints filetés également selon l'invention, le manchon ne comportant pas de talon central.

La figure 10 représente en coupe selon l'axe et en position assemblée encore un autre assemblage fileté du type manchonné selon l'invention, qui met en oeuvre deux joints filetés également selon l'invention, le manchon ne comportant pas de talon central.

Afin de mieux représenter l'invention, les figures qui suivent sont volontairement schématiques, les dimensions, les angles et les rapports des dimensions entre elles n'étant pas nécessairement respectés, certaines dimensions étant ainsi fortement exagérées.

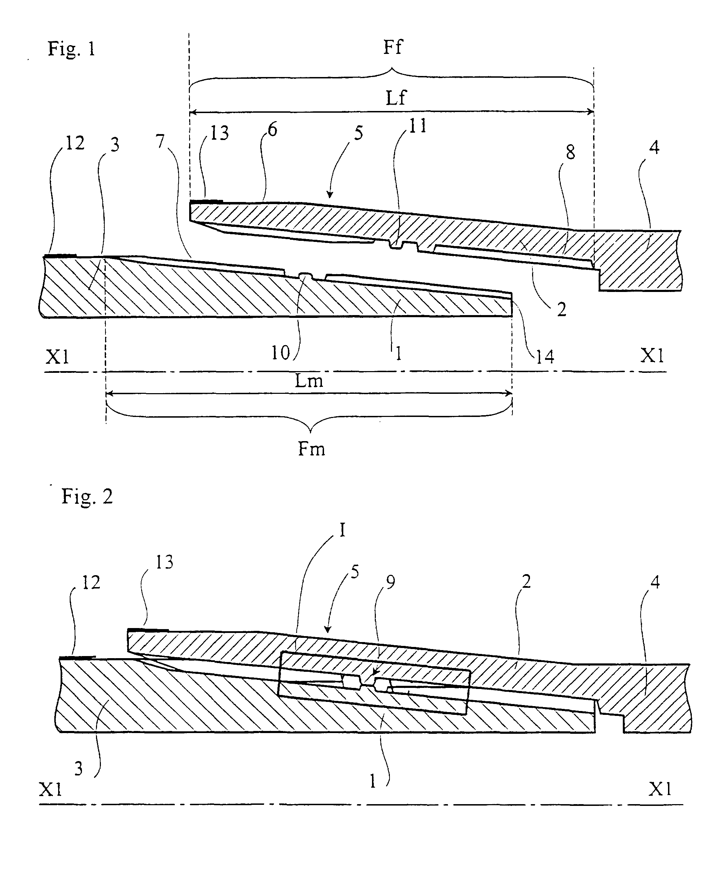

Sur les figures 1 et 2 sont représentés en demi- coupe axiale par un plan passant par leur axe X1-X1 commun, l'élément mâle 1 et l'élément femelle 2 disposés respectivement en extrémité d'un premier tube d'acier 3 et d'un deuxième tube d'acier 4 d'un joint fileté 5 selon l'invention.

Ces éléments mâle et femelle 1, 2 sont représentés assemblés sur la figure 2, le joint 5 étant dans sa position vissée. Ils sont représentés avant vissage sur la figure 1.

Sur la figure 1, pour une meilleure représentation du joint avant assemblage, l'élément femelle 2 est figuré décalé radialement par rapport à son axe X1 - X1.

L'extrémité en 6 du tube 4 sur laquelle a été réalisé l'élément femelle 2 a un diamètre extérieur supérieur au diamètre du tube 4 en partie courante, ce diamètre en 6 ayant été obtenu par expansion de l'extrémité du tube.

L'élément mâle 1 comprend un filetage mâle 7 extérieur constitué d'une zone filetée mâle Fm. Le filetage 7 est conique et représenté schématiquement comme cela est l'usage par les deux génératrices des filetages tangentes respectivement aux sommets de filets et aux fonds de filets.

Ce filetage 7 est réalisé sur un seul cône et la géométrie du filet est de façon en soi connue du type adapté à l'application recherchée pour le joint et ses conditions de service.

Par opposition aux joints filetés dont le filetage comporte sur chaque élément mâle et femelle deux zones filetées (ou deux gradins filetés) indépendantes décalées axialement et radialement, tel que par exemple le joint objet du brevet EP 0767335, on qualifiera le joint de la présente invention comme joint ayant un filetage constitué d'une seule zone filetée.

Ainsi la zone filetée mâle Fm est considérée comme une seule zone filetée mâle dont la longueur Lm couvre la longueur axiale du filetage d'une extrémité à l'autre, cette longueur comprenant les filets imparfaits ou évanouissants ou incomplets des extrémités.

On trouve sur l'élément femelle 2 un filetage femelle 8 intérieur, conique, correspondant au filetage mâle 7, et constitué d'une seule zone filetée femelle Ff, représentée de façon analogue au filetage 7.

Il comporte une seule zone filetée femelle dont la longueur Lf couvre la longueur axiale du filetage d'une extrémité à l'autre, cette longueur comprenant des filets imparfaits ou évanouissants ou incomplets des extrémités.

Un moyen d'étanchéité central 9 est interposé entre l'élément mâle 1 et l'élément femelle 2 au niveau des filetages 7, 8.

Ce moyen 9 est constitué par une surface de portée mâle 10 et une surface de portée femelle 11 disposées respectivement dans une zone globalement centrale de la zone filetée mâle Fm et de la zone filetée femelle Ff dans laquelle les filetages respectivement mâle et femelle ont été interrompus, ces deux surfaces de portées 10 et 11 étant aptes à être en contact d'appui sous pression l'une sur l'autre dans la position assemblée du joint telle que représentée en 9 figure 2.

De la sorte, le contact sous pression métal-métal entre les surfaces 10 et 11 crée une étanchéité sous forme d'une surface annulaire continue qui s'oppose à toute pénétration de fluide de l'extérieur des tubes 3, 4 vers l'intérieur ou inversement.

Par zone globalement centrale de la zone filetée mâle Fm et de la zone filetée femelle Ff, on entend une zone située à mi-longueur des longueurs Lm et Lf ou une zone distante du point milieu des longueurs Lm et Lf d'une quantité égale de part et d'autre de ce point milieu au 1/4 des longueurs filetées Lm, Lf, la position étant choisie notamment en fonction des pressions extérieures des fluides auxquelles il faut résister et de l'épaisseur des tubes.

Afin de faire coïncider parfaitement les surfaces 10 et 11 en fin de vissage, le joint selon l'invention comporte un moyen d'arrêt permettant d'arrêter le vissage à une position axiale relative déterminée de l'élément mâle 1 par rapport à l'élément femelle 2. Dans le cas des figures 1 et 2, ce moyen d'arrêt est constitué de façon en soi connue par deux repères 12, 13 respectivement marqués volontairement d'un trait surépaissi sur l'élément mâle en 12 et sur l'élément femelle en 13. Il suffit d'arrêter le vissage des éléments 1, 2 lorsque ces repères 12, 13 viennent en coïncidence, comme représenté figure 2.

Ces repères 12, 13 sont positionnés de manière qu'un certain frettage se développe entre le filetage mâle 7 et le filetage femelle 8 par suite de la forme conique des filetages qui permet de créer une interférence filetage entre filetage mâle 7 et filetage femelle 8.

Par interférence, on entend la différence positive existant avant vissage au niveau des zones Lm et Lf entre le rayon par rapport à l'axe du joint d'un point de la zone filetée mâle 7 et celui du point qui lui correspondra après vissage de la zone filetée femelle.

On s'arrangera avantageusement pour que l'interférence mesurée par rapport à l'axe du joint entre les surfaces de portée 10, 11 soit au moins égale et de préférence supérieure à l'interférence existant entre les filets 7, 8, ceci réduisant le chemin de serrage des portées jusqu'à la position assemblée.

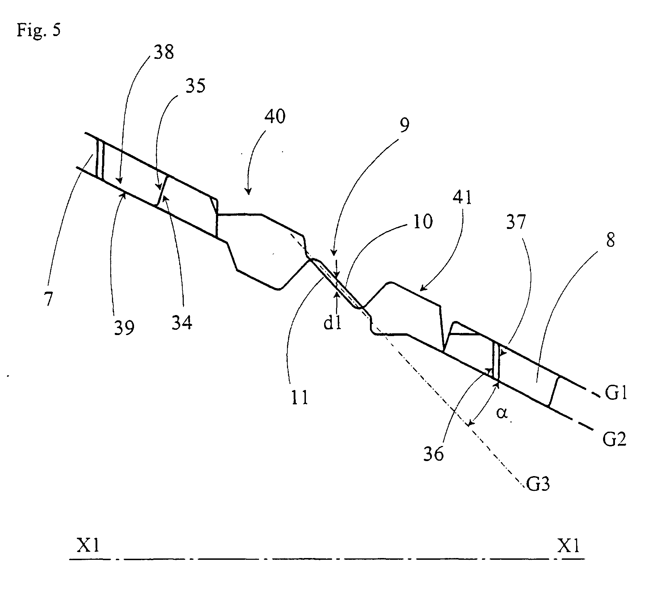

De part et d'autre du moyen d'étanchéité central 9, les filetages, tant de la zone filetée mâle Fm que de la zone filetée Ff, ont été interrompus de façon telle que le joint puisse être monté et démonté sans difficulté comme on le verra par exemple aux figures 5, 6 et 7.

L'étanchéité obtenue avec le moyen d'étanchéité central 9 décrit ci-avant est particulièrement efficace contre les pressions extérieures élevées du fait que les surfaces de portées mâle et femelle 10, 11 en position globalement centrale sont soutenues par une épaisseur de métal suffisamment importante par rapport à l'épaisseur du tube tant pour l'élément mâle 1 que pour l'élément femelle 2.

De façon avantageuse, au moins pour certaines conditions de service, on veillera à ce que, sur l'élément mâle 1, l'épaisseur de matière au niveau de la surface de portée mâle soit au moins égale à 50 % de l'épaisseur du tube 3.

De telles conditions sont impossibles à réaliser lorsque la portée d'étanchéité du joint est située au-delà du filetage à l'extrémité de l'élément mâle comme c'est par exemple le cas dans le brevet EP 0 488 912.

Augmenter l'épaisseur au niveau de cette portée pour l'élément mâle pose problème car on serait obligé de donner au joint pour le réaliser une conicité trop faible qui entraînerait des difficultés au niveau de l'engagement de l'élément mâle dans l'élément femelle et nécessiterait un dimensionnement en diamètre et longueur trop important et donc trop coûteux pour l'élément femelle.

Le joint selon l'invention peut être réalisé à partir d'un filetage conique classique à une seule zone filetée.

De la sorte, il nécessite des épaisseurs de tubes bien inférieures à ce que nécessitent les joints de l'art antérieur dont le filetage comporte deux zones filetées ou gradins indépendantes décalées axialement et radialement. Les joints de l'invention sont de ce fait beaucoup plus compacts, moins chers en matière et plus simples à usiner.

On remarquera par ailleurs, que, du fait de la position globalement centrale du moyen d'étanchéité central 9, la zone filetée mâle 7 peut s'étendre jusqu'à l'extrémité 14 de l'élément mâle avec des filets parfaits, point où est calculée l'efficacité de l'élément femelle 2.

De la sorte, on peut réduire l'encombrement du joint au niveau de l'élément femelle, c'est-à-dire réduire le diamètre extérieur de cet élément femelle 2 par rapport à un joint classique muni de portées d'étanchéité en extrémité de l'élément mâle.

De même, le filetage femelle 8 peut vers l'extrémité libre de l'élément femelle être prolongé jusqu'à ce que l'on atteigne le diamètre extérieur courant du tube 3. De la sorte l'efficacité du joint est de 100 % du tube 3. Ceci n'est pas possible avec un joint muni de portées d'étanchéité à l'extrémité libre de l'élément femelle.

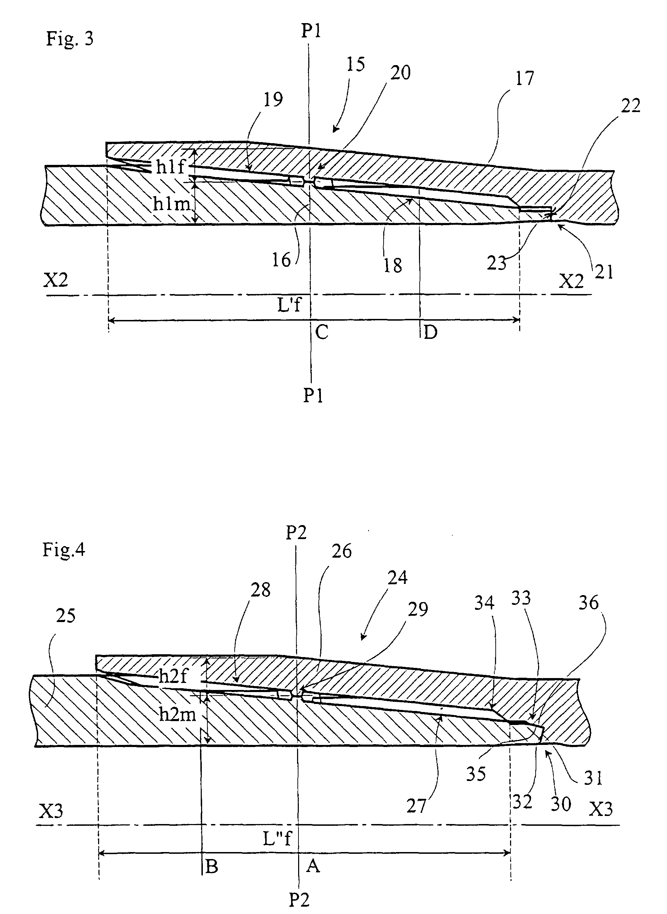

La figure 3 représente une variante du joint des figures 1 et 2.

Ce joint 15 est représenté dans la position assemblée en demi-coupe axiale, seule la partie supérieure à l'axe X2-X2 étant représentée.

Comme le joint 5 des figures 1 et 2, il comporte un élément mâle 16 et un élément femelle 17 qui sont munis chacun d'une seule zone filetée conique respectivement mâle 18 et femelle 19.

Un moyen d'étanchéité central 20 est disposé dans la zone globalement centrale des filetages mâle 18 et femelle 19, ici sensiblement au milieu de la longueur L'f de la zone filetée femelle 19.

Le moyen d'arrêt permettant d'arrêter le vissage de l'élément mâle 16 dans l'élément femelle 17 en position déterminée est constitué ici par une butée 21 formée par un épaulement intérieur 22 de l'élément femelle, épaulement transversal à l'axe X2-X2 sur lequel vient s'appuyer l'extrémité 23 de l'élément mâle 16, extrémité à laquelle on a donné la forme voulue pour qu'elle porte sur l'épaulement 22.

De la sorte, le vissage lors de l'assemblage du joint 15 est arrêté par la butée 21 lorsqu'on atteint le couple de serrage voulu.

On s'arrangera bien entendu pour que, tant au niveau des filetages 18, 19 qu'au niveau du moyen d'étanchéité central 20, la liaison soit frettante par suite des interférences existantes.

Si nécessaire on pourra dans ce cas prendre des filetages mâles et femelles 18, 19 du type dit "buttress" (selon l'American Petroleum Institute) avec flancs négatifs pour avoir un meilleur accrochage du filetage mâle 18 dans le filetage femelle 19 et mettre ainsi en appui les flancs des filetages qui sont du côté opposé à la butée 21.

La figure 4 représente en demi-coupe axiale au-dessus de l'axe X3-X3 une autre variante du joint des figures 1 et 2.

Ce joint 24 figuré dans la position assemblée comporte un élément mâle 25 et un élément femelle 26 munis chacun d'une seule zone filetée conique respectivement mâle 27 et femelle 28.

Un moyen d'étanchéité central 29 est situé ici sensiblement au milieu de la longueur L"f de la zone filetée femelle 28. Ce moyen est constitué comme le moyen de la figure 1 d'une surface d'étanchéité mâle et d'une surface d'étanchéité femelle en appui l'une sur l'autre dans la position assemblée.

Le moyen d'arrêt permettant d'arrêter le vissage de l'élément mâle 25 dans l'élément femelle 26 dans une position déterminée est constitué ici, de façon similaire à l'exemple de la figure 3 par une butée 30, l'épaulement conique convexe 31 de l'élément femelle servant d'appui à l'extrémité 32 conique concave correspondante de l'élément mâle 25.

Ici la butée 30 est conique rentrante, une telle butée étant en soi connue, alors que, dans le cas de la figure 3, la butée 21 était perpendiculaire à l'axe X2-X2.

De plus, le joint 24 comporte un deuxième moyen d'étanchéité 33 situé entre l'extrémité intérieure 34 des zones filetées mâle 27 et femelle 28 et la butée 30, moyen qui est constitué d'une surface conique convexe mâle 35 qui vient en position assemblée en appui étanche contre une surface conique concave femelle 36 correspondante.

Bien que le moyen d'étanchéité central 29 puisse servir pour assurer une étanchéité tant vis-à-vis du fluide intérieur au tube que vis-à-vis du fluide extérieur au tube, il peut être intéressant dans certains cas particulièrement sévères de réserver le moyen d'étanchéité central 29 à l'étanchéité vis-à-vis du fluide extérieur et de disposer, comme c'est le cas de la figure 4, un deuxième moyen d'étanchéité 33, ici sous forme de portées d'étanchéité mais cette représentation n'est pas limitative, ce qui assure l'étanchéité vis-à-vis du fluide intérieur.

A titre de variante, ce moyen d'étanchéité pourrait être constitué par exemple d'un anneau d'étanchéité, dispositif d'étanchéité en soi connu.

Dans le cas où le joint présente un deuxième moyen d'étanchéité comme 33, il est possible de décaler le moyen central d'étanchéité 29 vers l'extrémité de l'élément femelle.

On veillera avantageusement à disposer ledit moyen central d'étanchéité en restant dans les limites du segment AB du filetage femelle de longueur L"f, A représentant le point milieu de L"f et B le point situé au milieu de la demi-longueur de L"f du côté de l'extrémité libre de l'élément femelle 26.

Dans le cas où le joint ne comporte que le seul moyen central d'étanchéité comme par exemple représenté figure 3, si on veut faire jouer à ce moyen un rôle pour à la fois l'étanchéité externe et l'étanchéité interne, on pourra avantageusement décaler le moyen central d'étanchéité 20 de la position centrale à mi-longueur C du filetage femelle de longueur L'f en le disposant dans les limites du segment CD représentant le ¼ de la longueur de L'f, le décalage étant fait cette fois vers l'extrémité libre de l'élément mâle 16.

On s'arrangera dans tous les cas pour disposer au niveau du moyen central d'étanchéité (20, 29) dans le plan de section passant par ce moyen central d'étanchéité et perpendiculaire à l'axe dont la trace est P1-P1 (fig. 3) ou P2-P2 (fig. 4) d'une quantité de matière suffisante du côté élément mâle (h1m, h2m) et femelle (h1f, h2f) pour supporter les portées.

A titre d'exemple non limitatif h1m, h2m et h1f et h2f, tout en restant voisines de 50 % de l'épaisseur du tube 3, 4, pourront varier dans des limites de l'ordre de 30 % à 80 % de ladite épaisseur.

Les valeurs de h1m ou h2m peuvent même être un peu supérieures à 80% de l'épaisseur du corps du tube si le diamètre de la surface périphérique intérieure de l'élément mâle est rendu plus faible que celui du corps du tube, par exemple en rendant coniques les parois en extrémité mâle.

Les figures suivantes 5, 6 et 7 représentent de façon agrandie la zone 1 de la figure 2 dans plusieurs variantes de réalisation.

On retrouve figure 5 le filetage conique mâle 7 et le filetage conique femelle 8 assemblés figurés par leurs dents respectives.

Le filetage représenté à titre d'exemple non limitatif est du type API trapézoïdal de type dit "buttress" en soi connu avec les flancs de travail mâle 34 et femelle 35 en appui l'un sur l'autre et les flancs d'engagement mâle 36 et femelle 37.

Les sommets 38 des dents du filetage femelle 8 sont en appui frettant contre les creux 39 des dents du filetage mâle 7 par interférence des filetages entre eux et il en est de même de façon correspondante pour les sommets des dents du filetage mâle qui sont en appui contre les creux des dents du filetage femelle.

Bien entendu, on peut imaginer des relations entre le filetage femelle et le filetage mâle différentes mais ceux-ci restent toujours interférents et en position frettante lors du vissage.

Par exemple, les sommets 38 des dents du filetage femelle 8 peuvent être en appui frettant contre les creux 39 des dents du filetage mâle 7 par interférence des filetages entre eux alors que les sommets des dents du filetage mâle ne sont pas en appui contre les creux des dents du filetage femelle. G1 et G2 représentent les génératrices des cônes qui définissent l'encombrement maximum des filetages mâle 7 et femelle 8. C'est volontairement que la pente des génératrices a été exagérée pour faciliter la représentation.

On voit que le filetage tant mâle 7 que femelle 8 a été interrompu sur une longueur déterminée pour faire place au moyen d'étanchéité central 9. Cette longueur peut varier d'une quantité de l'ordre de 3 à 5 pas du filetage.

Les surfaces de portée mâle 10 et femelle 11 qui forment le moyen d'étanchéité 9 sont des surfaces tronconiques parallèles de génératrice G3 dont la pente est avantageusement supérieure à la pente des filetages.

De préférence, on limitera l'écart α entre la pente des génératrices G1, G2 et la pente de la génératrice des surfaces de portée G3 à 20°.

En position montée du joint, les surfaces 10, 11 sont en appui l'une contre l'autre avec une pression de contact qui assure l'étanchéité.

Cette pression de contact est d'autant plus forte que la valeur de l'interférence au niveau des surfaces 10, 11 est grande, cette interférence engendrant une déformation élastique source de ladite pression.

C'est volontairement que, figure 5, on a représenté les surfaces 10, 11 par leur géométrie avant vissage de manière à représenter l'interférence réelle entre ces deux surfaces, soit d1 qui est mesurée perpendiculairement à l'axe du joint X1-X1. Plus l'interférence aura une valeur forte, plus les pressions de contact des surfaces entre elles seront élevées.

Lorsque les surfaces sont en contact avec une pression de contact l'une contre l'autre, à l'état vissé, la ligne de contact se fait selon la génératrice G3.

Les portées 10, 11 sont entourées des dégagements 40, 41 nécessaires en amont et en aval pour permettre, d'une part l'engagement et le vissage sans problème de l'élément mâle dans l'élément femelle et d'autre part le dégagement nécessaire des outils d'usinage.

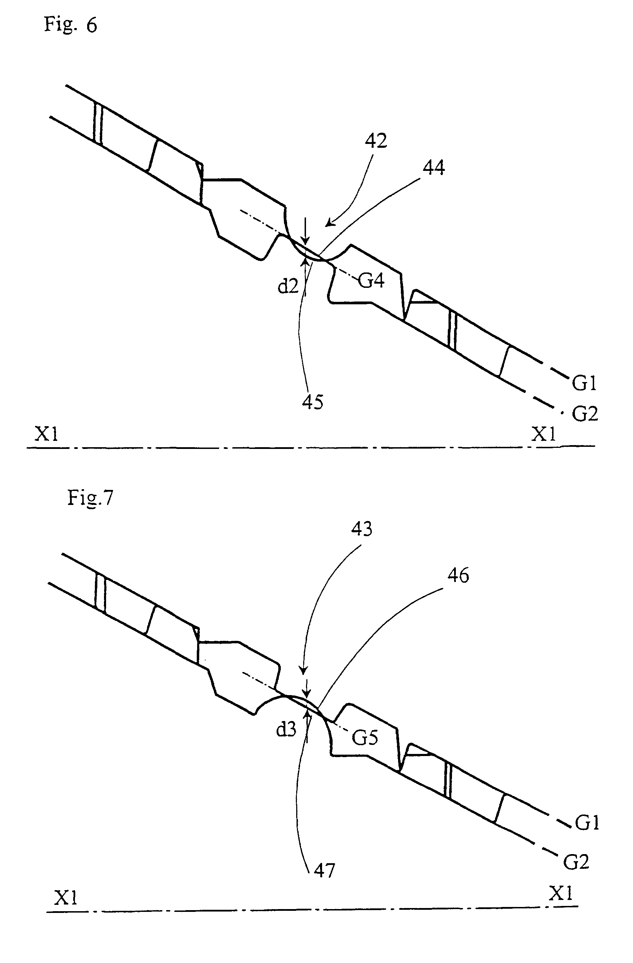

Les figures 6 et 7 représentent des variantes de réalisation du moyen d'étanchéité central 42, 43.

Figure 6, la surface de portée mâle 44 est constituée par une surface tronconique dont la génératrice G4 est parallèle aux génératrices G1 et G2 des filetages 7, 8. La surface de portée femelle 45 est constituée par une surface torique.

Sur la figure 7, c'est la surface de portée mâle 46 qui est torique et la surface de portée femelle qui est tronconique avec une génératrice G5 parallèle aux génératrices G1 et G2.

Les interférences des surfaces de portées sont représentées sur les figures 6 et 7 au point où elles sont maximales soit respectivement d2, d3.

Les surfaces de portées représentées aux figures 6 et 7 ont l'avantage d'être des surfaces à chemin de serrage moins long que les surfaces 10 et 11 de la figure 5. Cependant les pressions de contact que développent les surfaces 44/45 ou 46/47 ont une répartition différente de celle des surfaces 10, 11.

Les surfaces de portée mâle et de portée femelle couvertes par l'invention peuvent être de toute forme à partir du moment où elles sont aptes à être en appui l'une sur l'autre en position assemblée du joint.

Avantageusement, l'encombrement maximum de ces surfaces de portée sera défini par l'espace existant entre les génératrices G1 et G2 qui définissent les limites d'encombrement du filetage.

Dans la pratique, pour renforcer l'effet du moyen d'étanchéité central tel que 9, 42, 43 et/ou l'appui mutuel des surfaces telles que respectivement 10-11, 44-45, 46-47 et aussi si le joint comporte un deuxième moyen d'étanchéité tel que 33, pour éventuellement si nécessaire renforcer l'efficacité de ce deuxième moyen d'étanchéité, on peut être amené à réduire voire supprimer l'interférence radiale entre sommets et fonds de filet d'une des parties des filetages située d'un côté du moyen central d'étanchéité.

On peut pour cela sur un des deux éléments, c'est-à-dire sur l'élément mâle ou sur l'élément femelle du joint, décaler d'une distance mesurée par rapport à l'axe du joint de l'ordre de 0,005 mm à 0,10 mm la position des génératrices telles que G1 et G2 en traitant séparément la partie de la génératrice G1 si on travaille sur le filetage mâle ou de G2 si on travaille sur le filetage femelle, qui se trouve sur des figures telles que 5, 6, 7 à gauche du moyen d'étanchéité central, de la partie de la génératrice G1 ou G2 qui se trouve sur les figures telles que 5, 6, 7 à droite du moyen d'étanchéité central. De la sorte les deux parties de génératrice G1 ou G2, à savoir la partie qui se trouve à gauche du moyen d'étanchéité central et la partie qui se trouve à droite, restent parallèles tout en étant radialement faiblement décalées de la quantité indiquée par rapport à l'axe du joint.

Le fonctionnement global du joint qui vient d'être décrit immédiatement ci-dessus et qui reste fondamentalement basé sur une seule zone filetée femelle et une seule zone filetée mâle telles qu'elles ont été définies antérieurement dans le présent texte, n'est pas modifié pour autant dans son principe et les caractéristiques d'étanchéité peuvent bénéficier suivant le cas d'espèce de ce décalage radial d'un des filetages, mâle ou femelle, de part et d'autre de la zone du moyen d'étanchéité central.

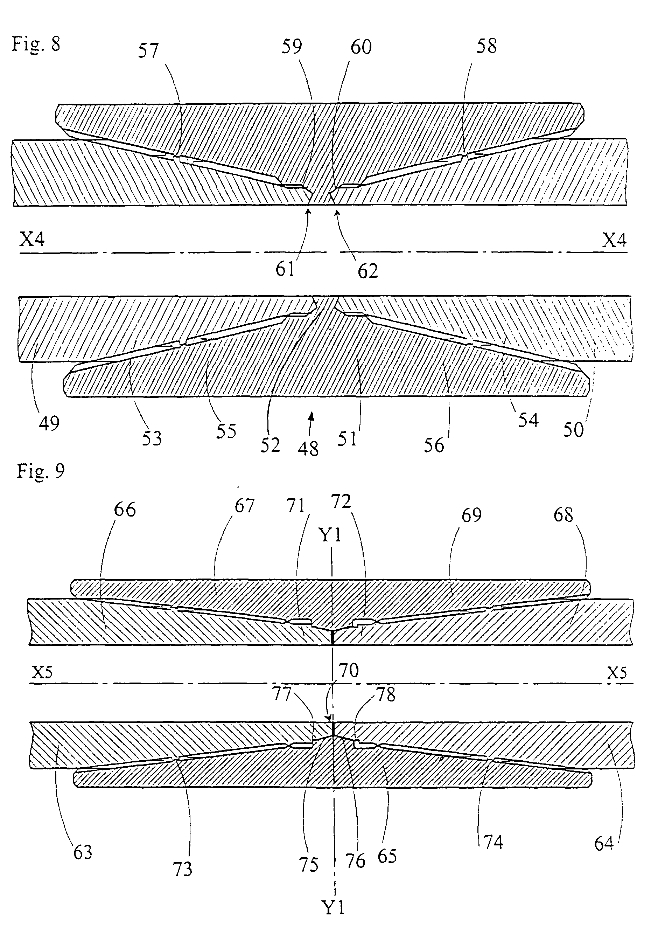

Les figures 8, 9 et 10 représentent trois modes de réalisation d'un assemblage du type manchonné de deux tubes mettant en oeuvre chacun deux joints selon l'invention.

Sur la figure 8, on voit en coupe axiale passant par l'axe X4-X4 l'assemblage 48 de deux tubes 49, 50 à l'aide d'un manchon 51.

Chaque tube à assembler tel que 49, 50 comporte à son extrémité un élément mâle tel que 53, 54.

Le manchon 51 est muni d'un talon central 52 et chaque extrémité du manchon 51 comporte un élément femelle tel que 55, 56.

L'association respectivement des éléments 53-55 et 54-56 constitue chacune un joint selon l'invention.

Les éléments mâles 53, 54 et les éléments femelles 55, 56 sont tels que leur structure correspond à la description qui en a été faite précédemment et qu'associés entre eux ils constituent chacun un joint selon l'invention. Dans ce cas, chaque joint comporte comme à la figure 4, en plus du moyen d'étanchéité central tel que 57, 58 un deuxième moyen d'étanchéité tel que 59, 60 du type de celui décrit en 33 figure 4.

Le moyen d'arrêt permettant d'arrêter le vissage de l'élément mâle dans l'élément femelle dans une position déterminée est constitué ici par le talon 52 du manchon 51 qui sert de butée telle que 61, 62 du même type que la butée représentée en 30 figure 4.

L'assemblage selon l'invention est donc constitué de deux joints également selon l'invention.

La figure 9 est une variante du mode de réalisation selon la figure 8 et représente en coupe axiale selon X5-X5 un assemblage selon l'invention réunissant deux tubes 63, 64 par un manchon 65.

A la différence de la figure 8, le manchon 65 ne comporte pas de talon tel que le talon 52 de la figure 8.

Ici les deux joints selon l'invention, constitués des éléments mâle et femelle respectifs 66-67 et 68-69 qui forment l'assemblage, comportent une butée commune 70 réalisée par mise en appui des extrémités 71, 72 des éléments mâles 66, 68 entre eux.

Cette butée commune constitue le moyen commun, pour ces deux joints selon l'invention, d'arrêter le vissage en position déterminée pour faire coïncider parfaitement les surfaces de portée mâle et femelle du moyen d'étanchéité central 73, 74 de chaque joint.

De plus, un deuxième moyen d'étanchéité est prévu en 75, 76 dans la zone centrale du manchon au-delà des zones filetées des joints constituant l'assemblage qui est ici réalisé de façon en soi connue par appui métal-métal de deux surfaces frettantes, coniques par exemple.

Pour augmenter la précision du positionnement central de la butée commune 70, des décrochements 77, 78 sont réalisés sous forme d'épaulements tant sur l'élément mâle 66, 68 de chaque joint formant l'assemblage que sur l'élément femelle 67,69.

On s'arrange pour que la distance axiale entre les épaulements femelles réalisés sur le manchon 65 soit légèrement inférieure à la distance axiale existant entre les épaulements mâles lorsque les extrémités 71, 72 des éléments mâles 66, 68 sont en appui sur leur butée commune 70, de sorte que ces épaulements ne s'opposent jamais à la mise en butée 70 des extrémités 71, 72 des éléments mâles 66, 68.

On voit ainsi sur la figure 9 que seul du côté du décrochement 77 les épaulements mâle et femelle sont en contact, un léger jeu axial existant du côté du décrochement 78 entre les épaulements mâle et femelle correspondants.

On s'arrange également pour que le positionnement des épaulements respectivement mâles et femelles des décrochements 77, 78 soit tel que la butée commune 70 se réalise lors du vissage dans la partie centrale du manchon c'est-à-dire sur le plan de son axe de symétrie Y1-Y1 ou au voisinage immédiat de celui-ci.

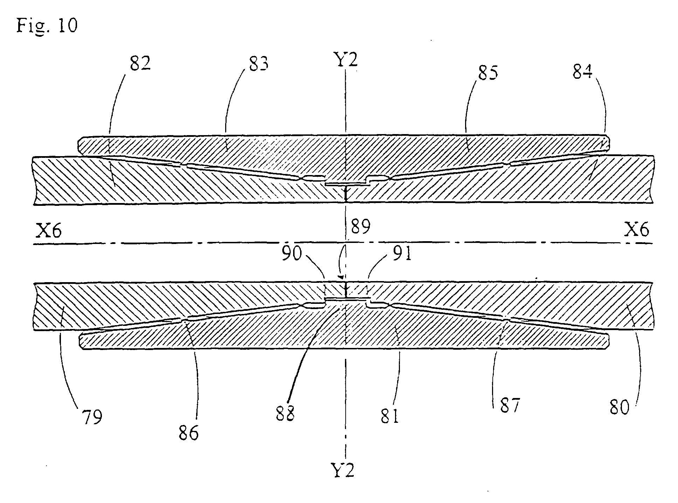

La figure 10 est une variante du mode de réalisation selon la figure 9 et représente en coupe axiale selon X6-X6 un assemblage selon l'invention réunissant deux tubes 79, 80 par un manchon 81.

A la différence de la figure 9, les deux joints selon l'invention constitués des éléments mâle et femelle respectifs 82-83 et 84-85 qui forment l'assemblage ne comportent chacun que leur moyen d'étanchéité central 86, 87.

Il n'existe pas, contrairement aux figures 8 ou 9, de deuxième moyen d'étanchéité.

L'assemblage comporte ici aussi une butée commune 89 et des décrochements 90, 91 réalisés respectivement tant sur les éléments mâles 82, 84 que sur les éléments femelles 83, 85 qui servent à bien positionner cette butée 89 dans ou au voisinage du plan de symétrie Y2-Y2 du manchon.

Les jeux axiaux voulus sont prévus pour avoir un fonctionnement de ces décrochements analogue à ce qui vient d'être décrit pour la figure 9.

Par contre, la zone centrale 88 de l'assemblage ne comporte pas de surface de portée d'étanchéité et l'extrémité non filetée des éléments mâles 82, 84 coulisse avec jeu radial librement dans la zone centrale 88 du manchon 81 jusqu'à venir en butée en 89.

On peut bien entendu réaliser aussi selon l'invention un assemblage de deux tubes du type intégral mettant en oeuvre un seul joint selon l'invention.

On se rapportera à titre d'exemple pour un tel assemblage aux figures 1 et 2, ainsi qu'aux figures 3 et 4.

Dans ce cas, chaque tube à assembler 3, 4 porte alternativement à ses extrémités un élément mâle ou un élément femelle selon l'invention et l'assemblage est réalisé en vissant un élément mâle 1 d'une extrémité d'un premier tube 3 dans un élément femelle 2 d'une extrémité d'un deuxième tube 4.

Comme on a pu le voir par la description qui précède, le joint selon l'invention et les assemblages qui sont réalisés avec ces joints sont particulièrement compacts tout en présentant les qualités d'étanchéité extérieure et intérieure voulues.

Ceci résulte du fait que leur filetage est constitué d'une seule zone filetée, sans rupture d'alignement du cône sur lequel ils sont réalisés, contrairement aux joints existants comportant deux zones filetées décalées axialement et radialement.

De plus, du fait de la position du moyen central d'étanchéité, on peut prolonger les filets parfaits du filetage aux deux extrémités quand on n'ajoute pas de deuxième moyen d'étanchéité.

Cela permet d'avoir un coefficient d'efficacité du joint supérieur à celui d'un joint de même dimension ayant des portées d'étanchéité aux extrémités des filetages.

Bien entendu, la conicité du filetage sera choisie pour pouvoir réaliser un engagement facile de l'élément mâle dans l'élément femelle.

Avantageusement et de façon non limitative, on choisira des filetages dont la pente par rapport à l'axe sera de 2,86 degrés ou plus.

Le joint et l'assemblage selon l'invention, étant destinés à résister à de fortes pressions, seront souvent mais pas exclusivement réalisés sur des tubes épais et de forts diamètres.

L'invention peut être réalisée dans de très nombreuses variantes qui restent toutes dans le domaine couvert par les revendications du présent brevet.

## Revendications

1. Joint tubulaire fileté du type comportant un élément mâle (1) disposé en extrémité d'un premier tube (3) et un élément femelle (2) disposé en extrémité d'un deuxième tube (4) ainsi qu'un moyen d'étanchéité central (9) formé par une surface de portée mâle (10) et une surface de portée femelle (11) aptes à être en appui l'une sur l'autre dans la position assemblée du joint, l'élément mâle (1) comprenant un filetage mâle conique extérieur (7) et l'élément femelle comprenant un filetage femelle conique intérieur (8) qui correspond au filetage mâle (7), un moyen d'arrêt (12, 13, 21) étant en outre prévu pour arrêter le vissage de l'élément mâle (1) dans l'élément femelle (2) en position déterminée dans la position assemblée du joint, **caractérisé en ce que** le filetage mâle (7) comporte une zone filetée mâle située sur un seul cône et le filetage femelle comporte de même une zone filetée femelle, et **en ce que** les surfaces de portée mâle et femelle du moyen d'étanchéité central sont disposées dans une zone globalement centrale de la zone filetée mâle pour la surface de portée mâle (10) et de la zone filetée femelle pour la surface de portée femelle (11) dans laquelle les filetages respectifs mâle et femelle ont été interrompus.

2. Joint selon la revendication 1, **caractérisé en ce que** la zone filetée mâle et la zone filetée femelle incorporent à la fois les filets parfaits et les filets d'extrémité imparfaits ou évanouissants ou incomplets.

3. Joint selon la revendication 1 ou 2, **caractérisé en ce que** le moyen d'étanchéité central est disposé dans une zone qui est distante du point milieu de la zone filetée mâle ou femelle d'une longueur au plus égale à ¼ de la longueur de ladite zone filetée de chaque côté dudit point milieu.

4. Joint selon l'une des revendications 1 à 3, **caractérisé en ce que** le moyen d'arrêt permettant d'arrêter le vissage de l'élément mâle dans l'élément femelle en position déterminée dans la position assemblée du joint est constitué par un moyen lié directement aux filetages (12, 13).

5. Joint selon l'une des revendications 1 à 3, **caractérisé en ce que** le moyen d'arrêt permettant d'arrêter le vissage de l'élément mâle dans l'élément femelle en position déterminée dans la position assemblée du joint est constitué par un moyen indépendant des filetages.

6. Joint selon la revendication 5, **caractérisé en ce que** le moyen indépendant des filetages est une butée.

7. Joint selon l'une des revendications 1 à 6 **caractérisé en ce qu'**au moins l'une des surfaces de portée, la portée mâle ou la portée femelle, du moyen central d'étanchéité est constituée par une surface conique dont la conicité va dans le même sens que la conicité du filetage et dont avantageusement l'angle par rapport à l'axe du joint est supérieur à l'angle du cône du filetage par rapport à cet axe.

8. Joint selon la revendication 7, **caractérisé en ce que** l'angle de la surface conique de portée avec l'axe du joint est supérieur d'une valeur au plus égale à 20° à l'angle du cône du filetage par rapport à cet axe.

9. Joint selon une des revendications 1 à 8, **caractérisé en ce que** l'encombrement maximum des surfaces de portée mâle et femelle du moyen central d'étanchéité est défini par l'espace existant entre les génératrices (G1-G2) définissant les limites d'encombrement des filetages.

10. Joint selon l'une des revendications 1 à 9 **caractérisé en ce que** la surface de portée mâle et la surface de portée femelle du moyen central d'étanchéité sont deux surfaces coniques dont la conicité est avantageusement supérieure à la conicité des filetages.

11. Joint selon l'une des revendications 1 à 10 **caractérisé en ce qu'**il comporte un deuxième moyen d'étanchéité.

12. Joint selon l'une des revendications 1 à 11 **caractérisé en ce que** la partie de la génératrice (G1-G2) définissant les limites d'encombrement des filetages qui se trouve située d'un côté du moyen d'étanchéité central présente pour l'un des filetages, le filetage mâle ou le filetage femelle, un faible décalage radial par rapport à la partie de la même génératrice qui se trouve de l'autre côté du moyen d'étanchéité central.

13. Joint selon la revendication 11 ou 12 **caractérisé en ce que** le deuxième moyen d'étanchéité est assuré par une surface de portée mâle disposée au voisinage de l'extrémité libre de l'élément mâle et une surface de portée femelle disposée sur la partie correspondante de l'élément femelle, les surfaces mâle et femelle venant en appui l'une sur l'autre lors de l'assemblage du joint.

14. Joint selon l'une des revendications 1 à 13 **caractérisé en ce que** l'interférence au niveau des portées mâle et femelle du moyen d'étanchéité central est supérieure à l'interférence entre le filetage mâle et le filetage femelle.

15. Assemblage fileté de deux tubes du type intégral **caractérisé en ce qu'**il est réalisé par un joint selon l'une des revendications 1 à 14, l'élément mâle du joint étant réalisé à l'extrémité du premier tube, l'élément femelle étant réalisé à l'extrémité du deuxième tube.

16. Assemblage selon la revendication 15 **caractérisé en ce que** l'élément femelle est réalisé sur une extrémité de tube qui a été préalablement expansée, l'élément mâle étant réalisé sur une extrémité de tube qui optionnellement a été épaissie.

17. Assemblage fileté de deux tubes (49, 50) du type réalisé par manchon (51) **caractérisé en ce qu'**il est réalisé par deux joints selon l'une des revendications 1 à 14, un élément mâle (53, 54) étant réalisé à chaque extrémité de tube (49, 50), un élément femelle (55, 56) étant réalisé à chaque extrémité d'un manchon (51), un élément mâle de chaque tube étant assemblé dans chacun des éléments femelles d'une extrémité du manchon.

18. Assemblage selon la revendication 17 **caractérisé en ce que** l'extrémité libre de chaque élément mâle (49, 50) vient en position assemblée s'appuyer sur une partie du manchon (51) formant talon central (52), créant ainsi deux butées (61, 62).

19. Assemblage selon la revendication 17 **caractérisé en ce que** les deux extrémités libres (71, 72) des éléments mâles (66, 68) viennent en position assemblée s'appuyer l'une sur l'autre formant ainsi une butée commune (70, 89).

20. Assemblage selon la revendication 19 **caractérisé en ce que** des décrochements (77, 78, 90, 91,) formant épaulements sont réalisés sur chaque élément mâle (66, 68) et chaque élément femelle (67, 69) au voisinage de la partie centrale du manchon, épaulements qui permettent de positionner avec précision ladite butée commune (70, 89).

## Claims

1. A threaded pipe connector of the type comprising a male element (1) disposed at the end of a first pipe (3) and a female element (2) disposed at the end of a second pipe (4) and a central sealing means (9), formed by a male bearing surface (10) and a female bearing surface (11) which can bear on each other in the connected position of the connector, the male element (1) comprising an external tapered male threading (7) and the female element comprising an internal tapered female threading (8) which corresponds to the male threading (7), a stop means (12, 13, 21) also being provided to stop makeup of the male element (1) in the female element (2) in a set position in the connected position of the connector, **characterized in that** the male threading (7) comprises a male threaded zone situated on a single cone and the female threading also comprises a female threaded zone, and **in that** the male and female bearing surfaces of the central sealing means are disposed in a globally central zone of the male threaded zone for the male bearing surface (10) and of the female threaded surface for the female bearing surface (11) within which the respective male and female threadings are interrupted.

2. A connector according to claim 1, **characterized in that** the male threaded zone and the female threaded zone include both perfect threads and threads with imperfect or vanishing or incomplete ends.

3. A connector according to claim 1 or claim 2, **characterized in that** the central sealing means is disposed in a zone which extends from the mid point of the male or female threaded zone by a length at most equal to ¼ of the length of said threaded zone to each side of said mid point.

4. A connector according to any one of claims 1 to 3, **characterized in that** the stop means which can stop makeup of the male element into the female element in the set position in the connected position of the connector is constituted by a means directly linked to the threadings (12, 13).

5. A connector according to any one of claims 1 to 3, **characterized in that** the stop means which stops makeup of the male element into the female element in the set position in the connected position of the connector is constituted by a means which is independent of the threadings.

6. A connector according to claim 5, **characterized in that** the means which is independent of the threadings is an abutment.

7. A connector according to any one of claims 1 to 6, **characterized in that** at least one of the bearing surfaces, the male surface or female surface, of the central sealing means is constituted by a tapered surface the taper of which is in the same direction as the taper of the threading and wherein advantageously the angle with respect to the axis of the connector is larger than the angle of the taper of the threading with respect to this axis.

8. A connector according to claim 7, **characterized in that** the angle of the tapered bearing surface with the connector axis is larger by a value of at most 20° than the angle of the taper of the threading with respect to this axis.

9. A connector according to any one of claims 1 to 8, **characterized in that** the maximum spatial requirement of the male and female bearing surfaces of the central sealing means is defined by the space existing between the generatrices (G1-G2) defining the limits of the spatial requirement of the threadings.

10. A connector according to any one of claims 1 to 9, **characterized in that** the male bearing surface and the female bearing surface of the central sealing means are two tapered surfaces the taper of which is advantageously higher than the taper of the threadings.

11. A connector according to any one of claims 1 to 10, **characterized in that** it comprises a second sealing means.

12. A connector according to any of claims 1 to 11, **characterized in that** the portion of the generatrix (G1-G2) defining the limits of the spatial requirement of the threadings which is located on one side of the central sealing means is for one of the threadings, the male or the female one, slightly offset, radially with respect to the portion of the same generatrix which is located on the other side of the central sealing means.

13. A connector according to any one of claims 11 or 12, **characterized in that** the second sealing means is provided by a male bearing surface located close to the free end of the male element and a female bearing surface located on the corresponding portion of the female element, the male and female surfaces coming into bearing contact with each other during makeup of the connector.

14. A connector according to any one of claims 1 to 13, **characterized in that** the interference at the male and female bearing surfaces of the central sealing means is higher than the interference between the male threading and the female threading.

15. An integral type threaded connection for two pipes, **characterized in that** it is produced by a connector according to any one of claims 1 to 14, the male element of the connector being formed at the end of a first pipe, the female element being formed at the end of the second pipe.

16. A connection according to claim 15, **characterized in that** the female element is produced at one end of the pipe which has been previously expanded, the male element being produced at one end of a pipe which has optionally been thickened.

17. A threaded connection for two pipes (49, 50) of the coupled type (51), **characterized in that** it is produced by two connectors according to any one of claims 1 to 14, one male element (53, 54) being formed at each end of the pipe (49, 50), a female element (55, 56) being produced at each end of a coupling (51), one male element of each pipe being connected in each of the female elements of one end of the coupling.

18. A connection according to claim 17, **characterized in that** in the connected position, the free end of each male element (49, 50) comes into bearing contact with a portion of the coupling (51) forming a central stop-lug (52), thus producing two abutments (61, 62).

19. A connection according to claim 17, **characterized in that** in the connected position, the two free ends (71, 72) of the male elements (66, 68) come into bearing contact with each other thus forming a common abutment (70, 89).

20. A connection according to claim 19, **characterized in that** steps (77, 78, 90, 91) forming shoulders are formed in each male element (66, 68) and each female element (67, 69) close to the central portion of the coupling, which shoulders enable said common abutment (70, 89) to be precisely positioned.

## Patentansprüche

1. Gewinde-Rohrverbindung von der Art, die ein Einsteckelement (1), das am Ende eines ersten Rohrs (3) angeordnet ist, und ein Aufnahmeelement (2), das am Ende eines zweiten Rohrs (4) angeordnet ist, sowie ein zentrales Dichtmittel (9) aufweist, das von einer Einsteck-Auflagefläche (10) und einer Aufnahme-Auflagefläche (11) gebildet wird, die in der montierten Stellung der Verbindung aufeinander aufliegen können, wobei das Einsteckelement (1) ein konisches Außengewinde (7) und das Aufnahmeelement ein konisches Innengewinde (8) aufweist, das dem Außengewinde (7) entspricht, wobei außerdem eine Stoppeinrichtung (12, 13, 21) vorgesehen ist, um die Schraubbewegung des Einsteckelements (1) in das Aufnahmeelement (2) in der montierten Stellung der Verbindung in einer bestimmten Stellung anzuhalten, **dadurch gekennzeichnet, dass** das Außengewinde (7) einen Außengewindebereich aufweist, der sich auf einem einzigen Konus befindet, und das Innengewinde in gleicher Weise einen Innengewindebereich aufweist, und dass die Einsteck- und Aufnahme-Auflageflächen des zentralen Dichtmittels sich in einem allgemein zentralen Bereich des Außengewindebereichs für die Einsteck-Auflagefläche (10) und des Innengewindebereichs für die Aufnahme-Auflagefläche (11) befinden, in dem die Außen- bzw. Innengewinde unterbrochen wurden.

2. Verbindung nach Anspruch 1, **dadurch gekennzeichnet, dass** zum Außengewindebereich und zum Innengewindebereich sowohl die vollkommenen Gewindegänge als auch die unvollkommenen oder schwindenden oder unvollständigen Endgewindegänge gehören.

3. Verbindung nach Anspruch 1 oder 2, **dadurch gekennzeichnet, dass** das zentrale Dichtmittel sich in einem Bereich befindet, der vom Mittelpunkt des Außengewindebereichs oder des Innengewindebereichs um eine Länge entfernt ist, die höchstens gleich 1/4 der Länge des Gewindebereichs auf jeder Seite des Mittelpunkts ist.

4. Verbindung nach einem der Ansprüche 1 bis 3, **dadurch gekennzeichnet, dass** die Stoppeinrichtung, die es ermöglicht, die Schraubbewegung des Einsteckelements in das Aufnahmeelement in der montierten Stellung der Verbindung in einer bestimmten Stellung anzuhalten, aus einer Einrichtung besteht, die direkt mit den Gewinden (12, 13) verbunden ist.

5. Verbindung nach einem der Ansprüche 1 bis 3, **dadurch gekennzeichnet, dass** die Stoppeinrichtung, die es ermöglicht, die Schraubbewegung des Einsteckelements in das Aufnahmeelement in der montierten Stellung der Verbindung in einer bestimmten Stellung anzuhalten, aus einer von den Gewinden unabhängigen Einrichtung besteht.

6. Verbindung nach Anspruch 5, **dadurch gekennzeichnet, dass** die von den Gewinden unabhängige Einrichtung ein Anschlag ist.

7. Verbindung nach einem der Ansprüche 1 bis 6, **dadurch gekennzeichnet, dass** mindestens eine der Auflageflächen, die Einsteck-Auflagefläche und/oder die Aufnahme-Auflagefläche, des zentralen Dichtmittels aus einer konischen Fläche besteht, deren Konizität in gleicher Richtung verläuft wie die Konizität des Gewindes, und deren Winkel in Bezug auf die Achse der Verbindung vorteilhafterweise größer ist als der Winkel des Konus des Gewindes in Bezug auf diese Achse.

8. Verbindung nach Anspruch 7, **dadurch gekennzeichnet, dass** der Winkel der konischen Auflagefläche mit der Achse der Verbindung um einen Wert von höchstens gleich 20° größer ist als der Winkel des Konus des Gewindes in Bezug auf diese Achse.

9. Verbindung nach einem der Ansprüche 1 bis 8, **dadurch gekennzeichnet, dass** der maximale Raumbedarf der Einsteck- und Aufnahme-Auflageflächen des zentralen Dichtmittels durch den Raum definiert wird, der zwischen den Mantellinien (G 1-G2) vorhanden ist, welche die Raumbedarfsgrenzen der Gewinde definieren.

10. Verbindung nach einem der Ansprüche 1 bis 9, **dadurch gekennzeichnet, dass** die Einsteck-Auflagefläche und die Aufnahme-Auflagefläche des zentralen Dichtmittels zwei konische Flächen sind, deren Konizität vorteilhafterweise größer ist als die Konizität der Gewinde.

11. Verbindung nach einem der Ansprüche 1 bis 10, **dadurch gekennzeichnet, dass** sie ein zweites Dichtmittel aufweist.

12. Verbindung nach einem der Ansprüche 1 bis 11, **dadurch gekennzeichnet, dass** der Teil der die Raumbedarfsgrenzen der Gewinde definierenden Mantellinie (G1-G2), der sich auf einer Seite des zentralen Dichtmittels befindet, für eines der Gewinde, das Außengewinde oder das Innengewinde, eine geringfügige radiale Verschiebung in Bezug auf den Teil der gleichen Mantellinie aufweist, der sich auf der anderen Seite des zentralen Dichtmittels befindet.

13. Verbindung nach Anspruch 11 oder 12, **dadurch gekennzeichnet, dass** das zweite Dichtmittel von einer Einsteck-Auflagefläche, die sich in der Nähe des freien Endes des Einsteckelements befindet, und von einer Aufnahme-Auflagefläche gewährleistet wird, die im entsprechenden Bereich des Aufnahmeelements angeordnet ist, wobei die Einsteck- und die Aufnahmefläche bei der Montage der Verbindung aufeinander zu liegen kommen.

14. Verbindung nach einem der Ansprüche 1 bis 13, **dadurch gekennzeichnet, dass** die Interferenz in Höhe der Einsteck- und Aufnahme-Auflageflächen des zentralen Dichtmittels größer ist als die Interferenz zwischen dem Außengewinde und dem Innengewinde.

15. Schraubverbindung von zwei Rohren vom integralen Typ, **dadurch gekennzeichnet, dass** sie durch eine Verbindung gemäß einem der Ansprüche 1 bis 14 hergestellt wird, wobei das Einsteckelement der Verbindung am Ende des ersten Rohrs und das Aufnahmeelement am Ende des zweiten Rohrs hergestellt wird.

16. Verbindung nach Anspruch 15, **dadurch gekennzeichnet, dass** das Aufnahmeelement an einem Rohrende hergestellt wird, das vorher ausgedehnt wurde, während das Einsteckelement an einem Rohrende hergestellt wird, das wahlweise verdickt wurde.

17. Schraubverbindung von zwei Rohren (49, 50) von der Art, die durch eine Muffe (51) hergestellt wird, **dadurch gekennzeichnet, dass** sie durch zwei Verbindungen gemäß einem der Ansprüche 1 bis 14 hergestellt wird, wobei ein Einsteckelement (53, 54) an jedem Rohrende (49, 50) und ein Aufnahmeelement (55, 56) an jedem Ende einer Muffe (51) hergestellt wird, wobei ein Einsteckelement jedes Rohrs in jedes der Aufnahmeelemente eines der Enden der Muffe eingesetzt wird.

18. Verbindung nach Anspruch 17, **dadurch gekennzeichnet, dass** das freie Ende jedes Einsteckelements (49, 50) in der montierten Stellung auf einem Teil der Muffe (51) zu liegen kommt, der einen zentralen Absatz (52) bildet, wodurch zwei Anschläge (61, 62) erzeugt werden.

19. Verbindung nach Anspruch 17, **dadurch gekennzeichnet, dass** die beiden freien Enden (71, 72) der Einsteckelemente (66, 68) in der montierten Stellung aufeinander liegen, wodurch ein gemeinsamer Anschlag (70, 89) gebildet wird.

20. Verbindung nach Anspruch 19, **dadurch gekennzeichnet, dass** Schultern bildende Rücksprünge (77, 78, 90, 91) auf jedem Einsteckelement (66, 68) und jedem Aufnahmeelement (67, 69) in der Nähe des zentralen Teils der Muffe hergestellt werden, Schultern, die es ermöglichen, den gemeinsamen Anschlag (70, 89) präzise zu positionieren.
